# EUROPEAN PATENT APPLICATION

(11) **EP 1 610 501 A1**
(43) Date of publication of application: **28.12.2005**
(21) Application number: 03715676.7
(22) Date of filing: 31.03.2003
(51) Int. Cl.: H04L 12/56, H04L 12/66, H04M 3/00

(54) **SPEECH TRANSMITTER**

(71) Applicant: MITSUBISHI DENKI KABUSHIKI KAISHA, Tokyo 100-8310 (JP)
(72) Inventor: HORIE, Nobuyoshi, c/o MITSUBISHI DENKI KABUSHIKI K, Chiyoda-ku, Tokyo 100-8310 (JP)
(74) Representative: Popp, Eugen
(86) International application number: PCT/JP2003/004127
(87) International publication number: WO 2004/088939

(57) **Abstract**

A voice transmission apparatus 100 includes a subscriber-side I/F processing unit 1, a voice signal processing unit 2, a packet processing unit 3, an Ethernet I/F processing unit 4, a device-operation-monitoring-control processing unit 5, an amount of discarded voice packets/packet jitter measuring unit 6, a calling restriction determining unit 7, and an ITU-T Q. 50 DLC processing unit 8. An operation monitor control desk 9 and an exchange 10 are connected to the voice transmission apparatus 100. The voice transmission apparatus 100 can impose a calling restriction on the exchange 10 based on the amount of discarded packets and the amount of packet jitter measured by the amount of discarded voice packets/packet jitter measuring unit 6.

## Description

### Field of the Invention

The present invention relates to a voice transmission apparatus which can be placed between a subscriber-side exchange to which subscriber-side apparatus are connected and a network.

### Background of the Invention

A voice transmission apparatus which is an example of prior art multiplexing transmission apparatus has a structure in which a plurality of 2.048MHz (E1) or 1.544MHz (T1) signal lines according to ITU-T (International Telecommunication Union-Telecommunication Sector) recommendation G.703/G.704 from a subscriber-side exchange are inputted to a subscriber-side interface processing unit that interfaces with the subscriber-side exchange. 30 channels are multiplexed per one voice signal when the plurality of signal lines inputted to the subscriber-side interface processing unit are E1 signal lines, whereas 24 channels are multiplexed per one voice signal when the plurality of signal lines inputted to the subscriber-side interface processing unit are T1 signal lines. The prior art voice transmission apparatus disassembles incoming voice signals channel by channel, and detects sound portions of each of the incoming voice signals, encodes and compresses the sound portions of each of the voice signals, assembles packets from them, and sends out them onto a network, e.g., an IP (Internet Protocol) network.

As mentioned above, the prior art voice transmission apparatus has a function of converting voice signals transmitted thereto via E1/T1 channels into IP packets, and is so constructed as to send out all sound portions of the voice signals transmitted thereto via the E1/T1 channels, as IP packets, onto a network. However, in such a prior art voice transmission apparatus, a large volume of data exists in an IP network and network congestions can occur. In order to carry out high-quality data transmission even in this case, various techniques have been proposed. For example, Japanese patent application publication No. 8-251,226, Japanese patent application publication No. 7-303,114, and Japanese patent application publication No. 4-3,544 disclose prior art techniques for carrying out high-quality data transmission even when a large volume of data exists in an IP network and network congestions can occur.

In such a prior art voice transmission apparatus, since all sound portions of voice signals inputted via E1/T1 channels are outputted, as IP packets, to a network as mentioned above, and data packets from other data terminals are further inputted into the network, the amount of packets transmitted via the network can increase extremely. In such a case, routers and so on arranged in the network may discard voice packets, or a fluctuation, which is so-called packet jitter, may occur within a transmission time period during which voice packets are transmitted. A voice transmission apparatus which has received such a sequence of packets cannot send out a voice signal which is normally decoded to a subscriber-side exchange and this causes degradation in the quality of voice signals.

### Disclosure of the Invention

In accordance with the present invention, there is provided a voice transmission apparatus arranged between a subscriber-side exchange to which a subscriber-side terminal apparatus is connected and a network, the voice transmission apparatus including: a first interface means for exchanging a signal with the subscriber-side exchange; a second interface means for exchanging a signal with the network; a voice signal processing means for detecting sound portions of a voice signal which constitutes the signal, for encoding the voice signal having sound portions, and for decoding an encoded voice signal inputted thereto; a packet processing means for assembling packets from the voice signal encoded by the voice signal processing means, and for disassembling packets inputted thereto into a signal and for supplying it to the voice signal processing means; a measurement means for measuring an amount of packets which are discarded from packets associated with a voice signal included in the received packets, and an amount of jitter of the packets associated with the voice signal; a calling restriction determination means for determining whether to impose a calling restriction based on measurement results obtained by the measurement means; and a control signal creating means for creating a control signal for imposing a calling restriction on the subscriber-side exchange when the calling restriction determination means determines that the calling restriction needs to be imposed on the subscriber-side exchange.

Therefore, the present invention offers an advantage of being able to prevent degradation in the quality of voice signals by imposing a calling restriction on the subscriber-side exchange when network congestions occur due to a large amount of data packets and this results in a large amount of discarded voice packets and a large amount of packet jitter.

In the voice transmission apparatus according to the present invention, the packets include an IP packet, a UDP packet, and an RTP packet.

Therefore, the present invention offers another advantage of being able to prevent degradation in the quality of voice signals in the voice transmission apparatus.

In the voice transmission apparatus according to the present invention, the second interface means is an interface means which complies with Ethernet.

Therefore, the present invention offers a further advantage of being able to connect the voice transmission apparatus with Ethernet.

In the voice transmission apparatus according to the present invention, the control signal output means is an ITU-T Q.50 DLC processing means for outputting the control signal for imposing a calling restriction on the subscriber-side exchange according to ITU-T recommendation Q.50.

Therefore, the present invention offers another advantage of being able to prevent degradation in the quality of voice signals in the voice transmission apparatus.

### Brief Description of the Figures

Fig. 1 is a block diagram showing the structure of a voice transmission apparatus in accordance with embodiment 1 of the present invention;
Fig. 2 is a diagram showing the structure of the header of an RTP packet;
Fig. 3 is a diagram showing the structure of a first communication system in which one voice transmission apparatus in accordance with embodiment 1 of the present invention is arranged;
Fig. 4 is a diagram showing the structure of a second communication system in which one voice transmission apparatus in accordance with embodiment 1 of the present invention is arranged; and
Fig. 5 is a flow chart showing a flow of the operation of one voice transmission apparatus in accordance with embodiment 1 of the present invention.

### Preferred Embodiment of the Invention

In order to explain the invention in greater detail, the preferred embodiment of the invention will be explained below with reference to the accompanying figures.

### Embodiment 1.

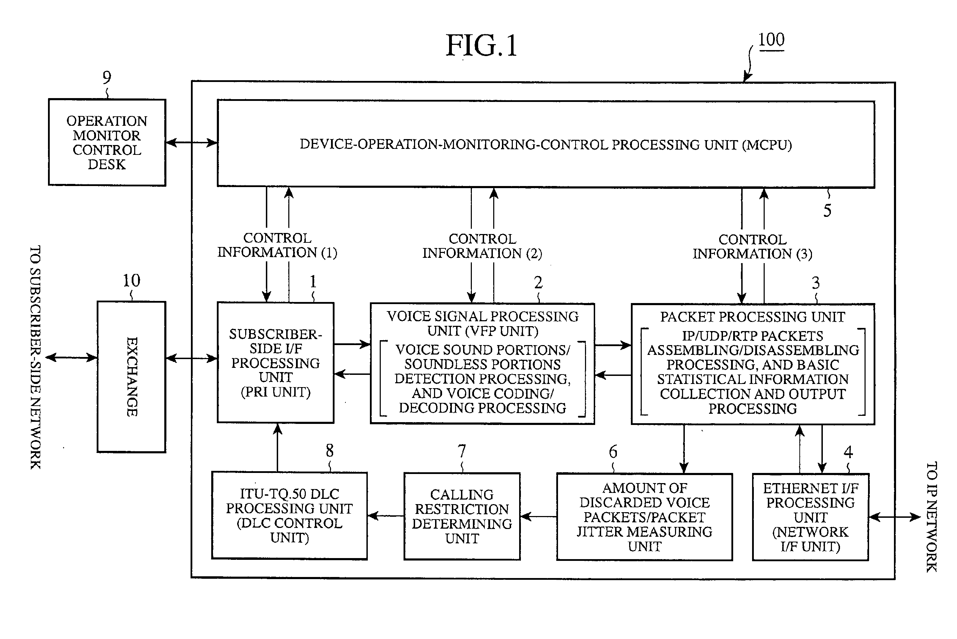

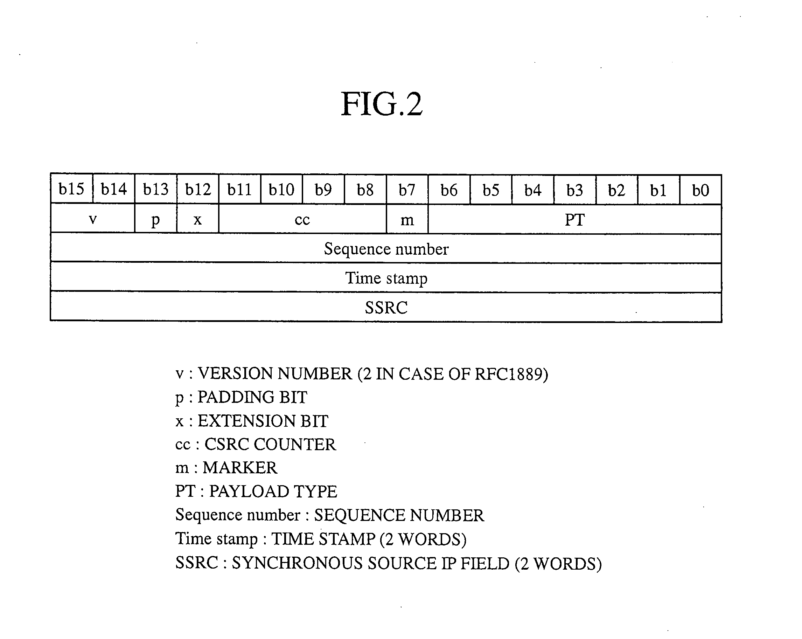

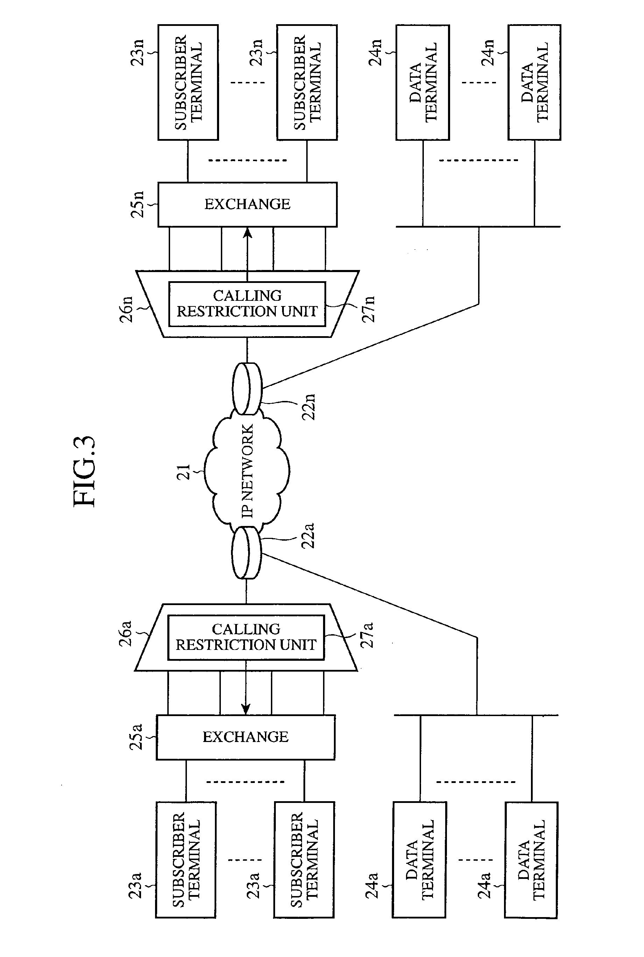

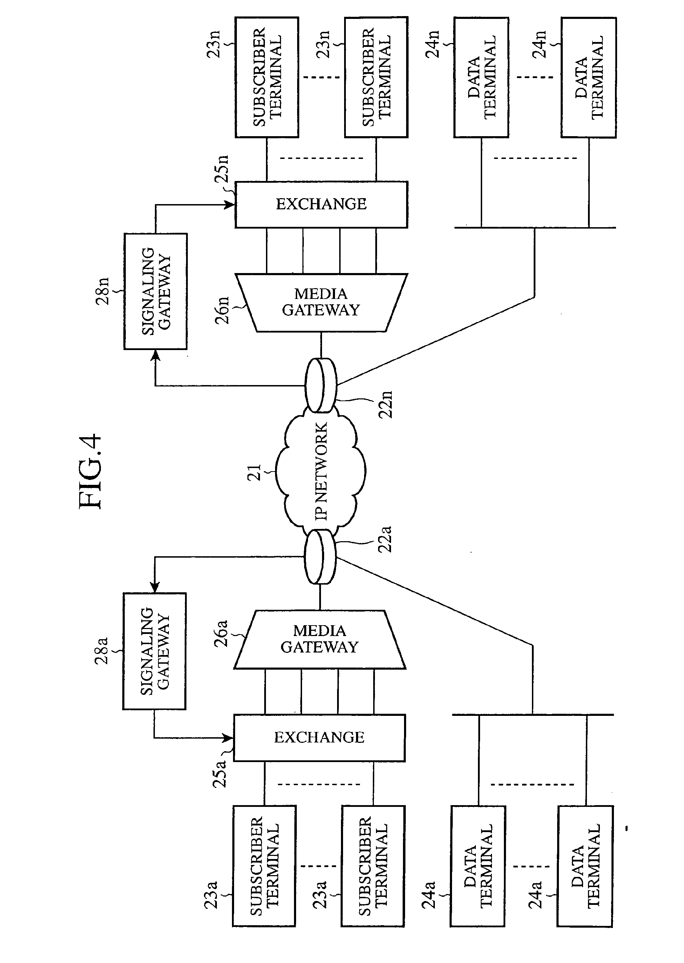

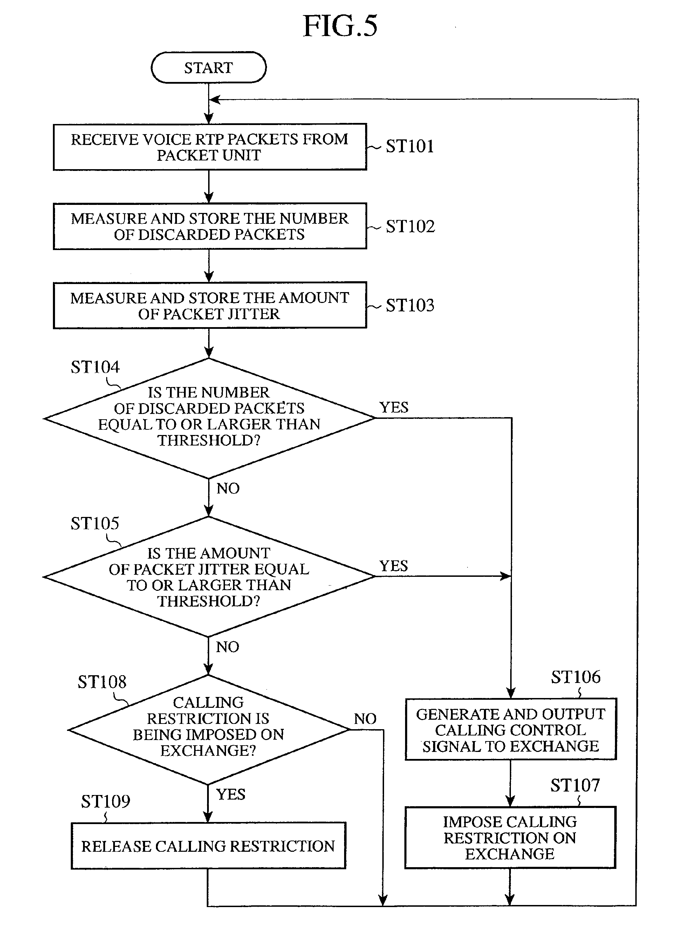

Fig. 1 is a block diagram showing the structure of a voice transmission apparatus 100 in accordance with embodiment 1, and Fig. 2 is a diagram showing the structure of the header of an RTP packet. Fig. 3 is a diagram showing the structure of a first communication system in which one voice transmission apparatus 100 according to this embodiment is disposed, and Fig. 4 is a diagram showing the structure of a second communication system in which one voice transmission apparatus 100 according to this embodiment is disposed. Fig. 5 is a flow chart showing a flow of the operation of one voice transmission apparatus 100 according to this embodiment.

As shown in Fig. 1, the voice transmission apparatus 100 in accordance with embodiment 1 is provided with a subscriber-side I/F processing unit 1, a voice signal processing unit 2, a packet processing unit 3, an Ethernet I/F processing unit 4, a device-operation-monitoring-control processing unit 5, an amount of discarded voice packets/packet jitter measuring unit 6, a calling-restriction determining unit 7, and an ITU-T Q.50 DLC processing unit 8, and an operation monitor control desk 9 and an exchange 10 are connected to the voice transmission apparatus 100.

In order to exchange a signal between the exchange 10 and the voice transmission apparatus 100, the subscriber-side I/F processing unit 1 (referred to as the PRI (Primary Rate Interface) unit from here on) converts the signal into a signal having an exchangeable form, and creates and adds a control signal or the like to the signal. Two or more 2.048 MHz (E1) or 1.544MHz (T1) signal lines which comply with ITU-T recommendation G.703/G.704 extending from the exchange 10 are inputted to the PRI unit 1. 30 channels are multiplexed per one voice signal when the plurality of signal lines inputted to the PRI unit 1 are E1 signal lines, whereas 24 channels are multiplexed per one voice signal when the plurality of signal lines inputted to the PRI unit 1 are T1 signal lines. The PRI unit 1 demultiplexes each inputted voice signal into a number of signals associated with the corresponding number of channels, and outputs them to the voice signal processing unit 2 channel by channel.

The voice signal processing unit 2 (referred to as the VFP (Voice Frequency Signal Processing) unit from here on) performs detection of sound portions or soundless portions, and coding and decoding on each voice signal inputted thereto from the PRI unit 1. The VFP unit 2 carries out compression coding on only parts of each voice signal inputted thereto from the PRI unit 1, which are determined as sound portions, by means of a high-efficiency voice CODEC (for example, an ITU-T recommendation G.729 CS-ACELP CODEC), and outputs each compressed voice signal to the packet processing unit 3.

The packet processing unit 3 packetizes each voice signal on which the compression coding has been carried out by the VFP unit 2 into RTP (Real-Time Transfer Protocol), UDP (User Datagram Protocol), and IP packets which are running in order of RTP, UDP, and IP, and outputs them to the Ethernet I/F processing unit 4 (referred to as the network I/F unit from here on). The packet processing unit 3 also depacketizes packets inputted thereto from the network I/F unit 4 into signals, and outputs them to the VFP unit 2. The packet processing unit 3 further collects information, such as information about basic statistics, and performs output processing on the collected information. RTP packets are defined by RFC (Request For Comments) 2508 of IETF (Internet Engineering Task Force), as shown in Fig. 2.

The network I/F unit 4 converts packets received thereby from the packet processing unit 3 into Ethernet frames, and sends out them onto a network (for example, an IP network). The device-operation-monitoring-control processing unit (referred to as the MCPU unit (or Main CPU) from here on) 5 downloads various apparatus parameters received thereby from the operation monitor control desk 9 to respective components which constitute the voice transmission apparatus 100, and monitors a failure status of each of the components and outputs information indicating the failure status to the operation monitor control desk 9. If the voice transmission apparatus 100 has a component in which a failure has occurred, the device-operation-monitoring-control processing unit carries out operation and monitoring control on the whole of the apparatus, such as a blockage of a voice output signal line of the component in which a failure has occurred, so that other normally operating units may not be affected. The control processing is performed according to three pieces of control information (1), (2), and (3) as shown in Fig. 1

The amount of discarded voice packets/packet jitter measuring unit 6 measures the amount of discarded packets associated with the received voice and the amount of jitter of the received voice based on information about the packets processed by the packet processing unit 3. When the amount of packets transmitted via the network is large, discarding of some packets and an amount of jitter may occur in each router or the like arranged on the network.

The calling restriction determining unit 7 determines whether to impose a calling restriction on the subscriber-side exchange 10 based on the amount of discarded packets and the amount of packet jitter which are measured by the amount of discarded voice packets/packet jitter measuring unit 6.

The ITU-T Q.50 DLC processing unit 8 (referred to as the DLC (Dynamic Load Control) control unit from here on) accepts the determination result of the calling restriction determining unit 7, and, when the determination result indicates that a calling restriction needs to be imposed on the subscriber-side exchange 10, outputs DLC information to the PRI unit 1 based on ITU-T Q.50 by using a signaling bit to the subscriber-side exchange 10. The information about this calling restriction is periodically inputted to the DLC control unit from the calling restriction determining unit 7.

The operation monitor control desk 9 monitors and controls the operating state and operation or use state of the voice transmission apparatus 100, and transmits various apparatus parameters to the MCPU unit 5. The voice transmission apparatus 100 is controlled according to these parameters.

The exchange 10 is engaged in exchange of signals between a subscriber-side network and the IP network, and callings are controlled according to a calling restriction determination signal from the PRI unit 1.

The above description is directed to a flow of signals from the exchange 10, i.e., the subscriber side to the network side. In the case of a flow of signals in an opposite direction, i.e., a direction from the network side to the subscriber side, the network I/F unit 4 extracts packets from each Ethernet frame inputted thereto from the network side, and the packet processing unit 3 disassembles the packets from the network I/F unit 4 in order of IP, UDP, and RTP packets so as to extract coded voice signals. The VFP unit 2 decodes the voice signals extracted by the packet processing unit 3, and the PRI unit 1 multiplexes the decoded voice signals transmitted via channels and then outputs them to the exchange 10. The other components operate in the same way as mentioned above.

Next, a communication system to which one above-mentioned voice transmission apparatus 100 is applied will be explained. Fig. 3 shows a first example of the communication system in which subscriber-side apparatus are connected to an IP network 21 via a plurality of routers 22a to 22n. A plurality of subscriber-side terminals (for example, telephones and FAX machines) 23a to 23n and a plurality of data terminals 24a to 24n are connected to the plurality of routers 22a to 22n by way of exchanges 25a to 25n and media gateways 26a to 26n. A plurality of calling restriction units 27a to 27n are disposed in the plurality of media gateways 26a to 26n, respectively, and each of the plurality of routers 22a to 22n is equipped with a means for measuring the amount of discarded voice packets and the amount of packet jitter. In this first example, each of the plurality of routers 22a to 22n and the plurality of calling restriction units 27a to 27n is provided with the same components as those included in one voice transmission apparatus 100 in accordance with the present invention.

Each of the plurality of routers 22a to 22n measures the amount of packets which are discarded from voice packets which it obtains from the IP network 21 and the amount of packet jitter of the voice packets, and notifies measurement results to a corresponding one of the plurality of media gateways 26a to 26n. Each of the plurality of calling restriction units 27a to 27n provides an instruction for imposing a calling restriction to a corresponding one of the plurality of exchanges 25a to 25n when either one of the measured values is equal to or greater than a predetermined threshold value.

Thus, each of the plurality of routers 22a to 22n measures the amount of packets which are discarded from voice packets which are included in a large volume of packets transmitted via the IP network 21 from corresponding ones of the plurality of subscriber-side terminals 23a to 23n and the plurality of data terminals 24a to 24n, and the amount of packet jitter of the voice packets, and imposes a calling restriction on a corresponding one of the plurality of exchanges 25a to 25n based on the measured values. Therefore, the communication system makes it possible to prevent degradation in the quality of voice signals.

Fig. 4 is a second example of the communication system to which voice transmission apparatus 100 according to this embodiment are applied, and in which subscriber-side apparatus are connected to the IP network 21 via a plurality of routers 22a to 22n. A plurality of subscriber-side terminals (for example, telephones and FAX machines) 23a to 23n and a plurality of data terminals 24a to 24n are connected to the plurality of routers 22a to 22n by way of exchanges 25a to 25n and media gateways 26a to 26n. A plurality of signaling gateways 28a to 28n are placed between the plurality of routers 22a to 22n and the plurality of exchanges 25a to 25n, respectively. Each of the plurality of routers 22a to 22n is equipped with a means for measuring the amount of discarded voice packets and the amount of packet jitter, and each of the plurality of signaling gateways 28a to 28n is provided with a function of imposing a calling restriction on a corresponding one of the plurality of exchanges 25a to 25. In this second example, each of the plurality of routers 22a to 22n and the plurality of signaling gateways 28a to 28n is equipped with the same components as those of one voice transmission apparatus 100 in accordance with the present invention.

Each of the plurality of routers 22a to 22n measures the amount of packets which are discarded from voice packets which it obtains from the IP network 21 and the amount of packet jitter of the voice packets, and notifies measurement results to a corresponding one of the plurality of signaling gateways 28a to 28n. Each of the plurality of signaling gateways 28a to 28n provides an instruction for imposing a calling restriction to a corresponding one of the plurality of exchanges 25a to 25n when either one of the measured values is equal to or greater than a predetermined threshold value.

Thus, each of the plurality of routers 22a to 22n measures the amount of packets which are discarded from voice packets included in a large volume of packets transmitted via the IP network 21 from corresponding ones of the plurality of subscriber-side terminals 23a to 23n and the plurality of data terminals 24a to 24n, and the amount of packet jitter of the voice packets, and each of the plurality of signaling gateways 28a to 28n imposes a calling restriction on a corresponding one of the plurality of exchanges 25a to 25n based on the measured values. Therefore, the communication system makes it possible to prevent degradation in the quality of voice signals.

Next, the operation of one voice transmission apparatus 100 in accordance with embodiment 1 will be explained with reference to a flow chart of Fig. 5.

First, the voice transmission apparatus 100 receives voice RTP packets which are disassembled by the packet processing unit 3 and which are included in data packets obtained from the IP network 21 via the network I/F unit 4 (in step ST101). The amount of discarded voice packets/packet jitter measuring unit 6 then measures and stores the number of discarded packets (in step ST102), and also measures and stores the amount of packet jitter (in step ST103). The amount of discarded voice packets/packet jitter measuring unit 6 measures the number of discarded packets based on sequence numbers, as shown in Fig. 2, included in the headers of the RTP packets, and measures the amount of packet jitter based on time stamp information included in the headers of the RTP packets.

The calling restriction determining unit 7 then determines whether or not the number of discarded packets is equal to or greater than a predetermined threshold (in step ST104). When the number of discarded packets is not equal to or greater than the predetermined threshold (i.e., if No), the calling restriction determining unit 7 further determines whether or not the amount of packet jitter is equal to or greater than a predetermined threshold (in step ST105). When the calling restriction determining unit 7, in step ST104, determines that the number of discarded packets is equal to or greater than the predetermined threshold (i.e., if Yes), the DLC control unit 8 creates a calling restriction control signal for imposing a calling restriction on the exchange 10 (in step ST106). As a result, the PRI unit 1 imposes a calling restriction on the exchange 10 (in step ST107), and the voice transmission apparatus 100 returns to step ST101 in which it repeats the monitoring process.

When the calling restriction determining unit 7, in step ST105, determines that the amount of packet jitter is equal to or greater than the predetermined threshold (i.e. , if Yes), the DLC control unit 8 also creates a calling restriction control signal for imposing a calling restriction on the exchange 10 (in step ST106). As a result, the PRI unit 1 imposes a calling restriction on the exchange 10 (in step ST107), and the voice transmission apparatus 100 returns to step ST101 in which it repeats the monitoring process. In contrast, when determining that the amount of packet jitter is less than the predetermined threshold (i.e., if No), the calling restriction determining unit 7 determines whether or not a calling restriction is being imposed on the exchange (in step ST108). When no calling restriction is being imposed on the exchange (i.e., if No), the voice transmission apparatus 100 returns to step ST101 in which it repeats the monitoring process. In contrast, when a calling restriction is being imposed on the exchange (i.e., if Yes), the voice transmission apparatus 100 cancels this calling restriction (in step St109) and then returns to step ST101 in which it repeats the monitoring process.

As explained above, even when the components included in the voice transmission apparatus 100 operate, and some voice packets are discarded and an amount of packet jitter occurs in voice packets, voice data can be transmitted without causing degradation in the quality of voice signals.

The flow of the operation of the voice transmission apparatus 100 is not limited to the above-mentioned one, and can be any one in which similar control processing is carried out.

### Industrial Applicability

As mentioned above, the voice transmission apparatus in accordance with the present invention can be placed between a subscriber-side exchange to which subscriber-side apparatus are connected and a network, and is suitable for preventing degradation in the quality of voice signals which are packetized and are transmitted between the subscriber-side exchange and the network.

## Claims

1. A voice transmission apparatus arranged between a subscriber-side exchange to which a subscriber-side terminal apparatus is connected and a network, **characterized in that** said voice transmission apparatus comprises:
a first interface means for exchanging a signal with said subscriber-side exchange;
a second interface means for exchanging a signal with said network;
a voice signal processing means for detecting sound portions of a voice signal which constitutes said signal, for encoding the voice signal having sound portions, and for decoding an encoded voice signal inputted thereto;
a packet processing means for assembling packets from the voice signal encoded by said voice signal processing means, and for disassembling packets inputted thereto into a signal and for supplying it to said voice signal processing means;
a measurement means for measuring an amount of packets which are discarded from packets associated with a voice signal included in the received packets, and an amount of jitter of the packets associated with the voice signal;
a calling restriction determination means for determining whether to impose a calling restriction based on measurement results obtained by said measurement means; and
a control signal creating means for creating a control signal for imposing a calling restriction on said subscriber-side exchange when said calling restriction determination means determines that the calling restriction needs to be imposed on said subscriber-side exchange.

2. The voice transmission apparatus according to Claim 1, **characterized in that** the packets include an IP packet, a UDP packet, and an RTP packet.

3. The voice transmission apparatus according to Claim 1, **characterized in that** said second interface means is an interface means which complies with Ethernet.

4. The voice transmission apparatus according to Claim 1, **characterized in that** said control signal output means is an ITU-T Q.50 DLC processing means for outputting the control signal for imposing a calling restriction on said subscriber-side exchange according to ITU-T recommendation Q.50.
